# EUROPEAN PATENT SPECIFICATION

(11) **EP 0 874 706 B1**
(45) Date of publication and mention of the grant of the patent: **17.12.2003**
(21) Application number: 97940513.1
(22) Date of filing: 09.09.1997
(51) Int. Cl.: B23B 51/00, B23B 51/02

(54) **TOOL FOR CUTTING MACHINING**
WERKZEUG FÜR SCHNEIDMASCHINEN
OUTIL POUR MACHINE DE COUPE

(30) Priority: 13.09.1996 SE 9603325
(43) Date of publication of application: 04.11.1998
(60) Divisional application: 99123415.4
(73) Proprietor: SECO TOOLS AB (publ), S-737 82 Fagersta (SE)
(72) Inventor: BERGLUND, Mattias, S-825 92 Njutanger (SE); LUNDBERG, Fredrik, S-696 33 Askersund (SE); SVENSSON, Ingela, S-582 69 Linköping (SE)
(74) Representative: Taquist, Lennart
(86) International application number: PCT/SE97/01509
(87) International publication number: WO 98/010881

(56) References cited:
- EP-A- 0 691 484
- DE-A- 19 605 157
- DE-C- 94 340
- DE-C- 367 010
- SE-B- 447 880
- US-A- 2 259 611

## Description

The present invention relates to a tool for rotary, cutting machining, comprising a tool body and a cutting portion. The tool body has a front surface and the cutting portion has a support surface provided to releasably abut against each other in a substantially radial plane. The tool body and the cutting portion comprise means that cooperate for holding them together. The invention also relates to a cutting portion and a tool body as well as a method for mounting a cutting portion to a tool body.

### Prior art

It is previously known to use interchangeable cutting edges on different types of tools for cutting machining, especially in a metallic workpiece. This technique however has yet its practical limitation due to handling reasons when it comes to milling and drilling tools which rotate around its longitudinal axis.

Through DE-PS-94340, on which the preambles of claims 1,7 and 9 are based, discloses a drill having a cutting portion secured to a drill shank by means of a bayonet coupling. The known drill is impaired with the drawbacks of short life, poor stability and precision. DE-PS-367,010 and US-A-2,259,611, it is previously known to provide drills with lockable drill tips, wherein the drill tip is retained with the aid of dove-tail profiles and with press fit, respectively. The known tools however are impaired with drawbacks such as bad torsion transferring ability and troublesome mounting and dismounting.

The present invention has as one object to provide a design of drilling and milling tools with interchangeable cutting edges, wherein said design eliminates problems with known technique.

Another object with the present invention is provide a rigid tool preferably for drilling or milling wherein the cutting portion cooperates with the tool body via a bayonet coupling.

Another object of the present invention is to provide a rigid tool preferably for drilling or milling wherein the cutting portion easily can be exchanged for hand without time consuming screwing or soldering.

Another object of the present invention is to provide a tool with a self centering cutting portion.

These and other objects have been achieved by the subject-matter of claims 1,7, 9 and 11.

### Description of the drawings

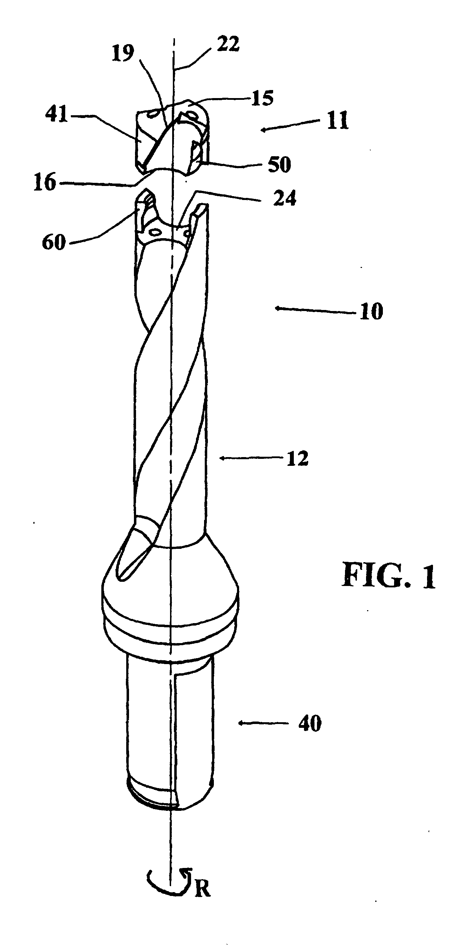

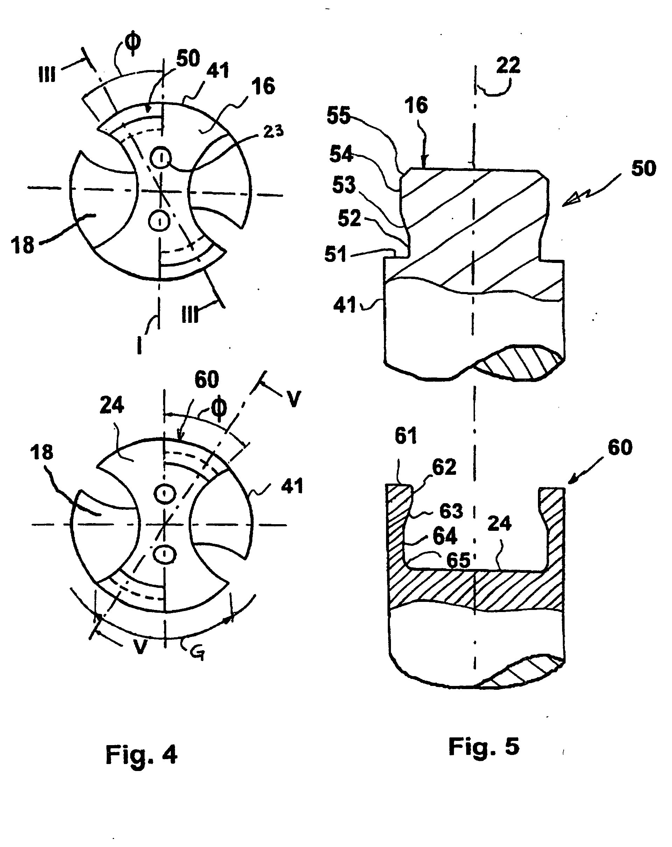

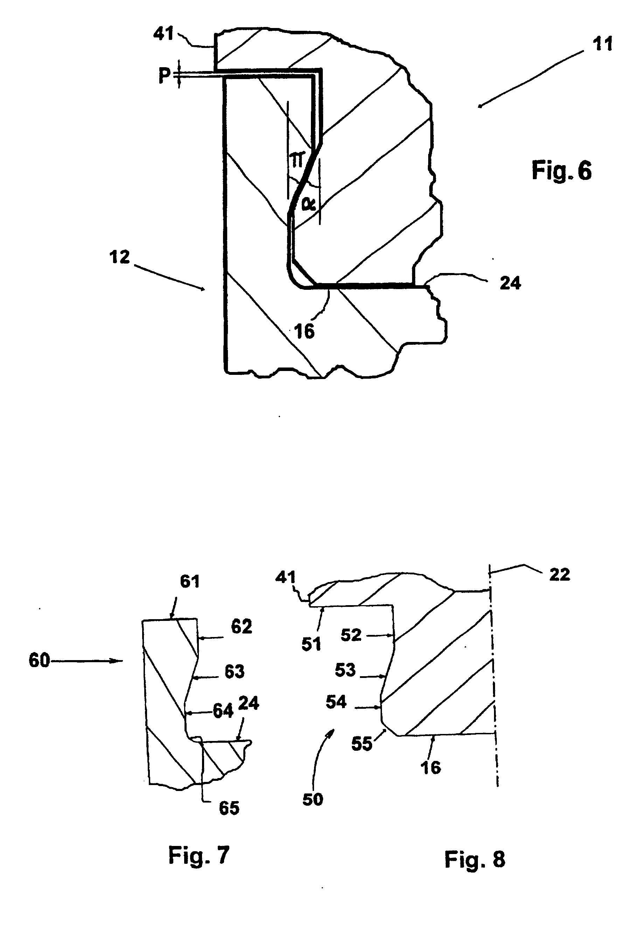

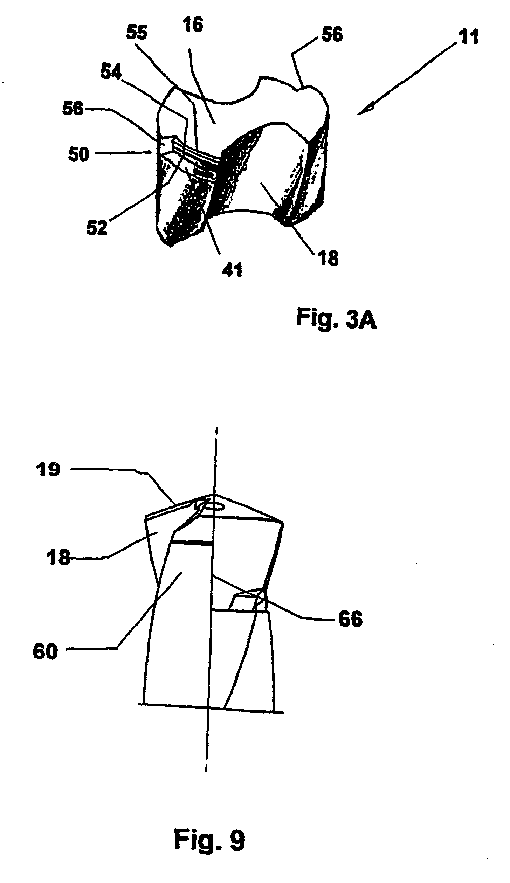

Fig. 1 shows a drilling tool according to the present invention, in an exploded view. Fig. 2 shows a cutting portion according to the present invention in a bottom view. Fig. 3 shows the cutting portion in a side view according to the line III-III in Fig. 2. Fig. 3A shows the cutting portion in a perspective view from below. Fig. 4 shows the forward end surface of a tool body according to the present invention in top view. Fig. 5 shows the drill shank in a side view according to the line VI-VI in Fig. 4. Fig. 6, 7 and 8 show cross-sections of a bayonet coupling of the tool. Fig. 9 shows the tool according to Fig. 1 in magnification.

### Detailed description of the Invention

The embodiment of a tool 10 according to the invention shown in Fig. 1 is a so called helix drill, which comprises a cutting portion or drill tip 11 and a drill body 12. The drill has a rotational direction R.

The drill tip 11 is provided with at least one cutting edge 19 in the of the drill tip 11 forward end at the end facing away from the drill body 12, which tip is given different designs depending on the area of application.

The drill tip 11 is made in hard material, preferably cemented carbide and most preferably in injection moulded cemented carbide and comprises two upper clearance surfaces 15, a support surface 16 as well as them uniting first 41 and second 18 curved surfaces. All these surfaces and associated edges are integrated with the drill tip and consequently performed in the same material, i.e. preferably injection moulded cemented carbide. Lines of intersection between the second curved surfaces or the chip flutes 18 and the clearance surfaces 15 form main cutting edges 19, preferably via reinforcing chamfers, not shown. Lines of intersection between the first curved surfaces 41 and the chip flutes 18 form secondary cutting edges. The chip flute may alternatively be adapted for a drill body with straight chip flutes. The radially external parts between the chip flutes consist of protruding lands 41, each having a circumferential length G. The largest diameter of the drill tip is the diametral distance between the radial extreme points of the secondary cutting edges. The height of the drill tip is substantially the same as the largest diameter of the tip, in order to minimize the wear from chips on the joint between the drill tip and the drill body. Flushing holes 23, substantially parallel with the rotational axis 22, extend through the drill tip from the support surface 16 to the orifice in respective upper clearance surface 15.

The support surface 16 according to Figs. 2, 3 and 3A is substantially planar but comprises a recess 50 at the transition between the support surface and each the jacket surface of the land 41. Each recess 50 comprises a first free surface 51 perpendicularly connected to the jacket surface, which perpendicularly connects to a second free surface 52, which in turn forms an acute angle α, Fig. 6, with a first guiding surface 53, which connects to a second guiding surface 54 parallel to the rotational axis 22, which connects to the support surface 16 via a radius or an entering bevel 55. The recess 50 has a stop surface 56, Fig. 3A, which is parallel to the axis 22 and which suitably lies in an axial plane which intersects said axis. The recess 50 extends in the tangential direction from the chip flute 18 to about half way of the tangential length L of the associated land 41.

The drill body is made in a material which has a lower Young's modulus than cemented carbide. The drill body has screw shaped chip flutes 18 or straight chip flutes and these can extend along the entire body or along a part thereof. The drill body 12 is provided with a front surface 24 at the end facing towards the drill tip 11, which surface is provided to abut against the support surface 16 of the drill tip 11. The largest diameter of the support surface is larger than the largest diameter of the front surface in order to minimize the wear from chips on the joint between the drill tip and the drill body. The front surface 24 is substantially planar but comprises a projection 60 at the transition between the front surface and the jacket surface of each land 41. The height of the projection is somewhat less than of the recess 50 depth. Each projection 60 comprises a first free surface 61 perpendicularly connected to the jacket surface, said surface perpendicularly connecting to a second free surface 62, which in its turn forms a pointed angle π with a first guiding surface 63, which connects to a second guiding surface 64 parallel to the rotational axis 22, which surface 64 connects to the front surface 24 via a radius 65. The projection 60 has a stop surface 66, Fig. 9, which is parallel with the axis 22 and which suitably lies in an axial plane which intersects said axis. The smallest diameter of the front surface is smaller than the largest diameter of the drill tip but larger than the smallest diameter of the drill tip. The projection 60 extends in the tangential direction from the chip flute 18 to about the half of the tangential length G of the associated land 41.

The stop surfaces 56 and 66, respectively, should be as far from the rotational axis as possible for best moment transfer, i.e. they are arranged diametrically opposed each other. The drill tip must be symmetrically formed in order to retain the tool's concentricity at varying strain, i.e. in order to keep the drill tip centered relative to the drill body. The projections 60 and the recesses 50 lie at a distance from and substantially rearwardly of the associated cutting edge 19 in the tool's rotational direction R.

Mounting of the drill tip 11 on the drill body 12 is done as follows. The drill tip 11 is brought in the direction towards the drill body 12, so that each projection 60 reaches into the associated chip flute and so that the support surface 16 abuts against the front surface 24. Then, the drill tip is rotated in the direction R within an angle interval φ which is less than 360°, preferably less than 60°, relative to the drill body so that the projection is allowed to move with slide fit in the recess until the stop surfaces 56 and 66 abut against each other. The drill tip 11 is now anchored in the drill body 12 in a satisfactory manner. Thus, the preformed spaces of the chip flutes 18 are used as the entrance and the exit of the bayonet coupling.

When the drill tip 11 shall be exchanged, the mounting procedure is reversed. The drill tip 11 then can be removed from the drill body 12 and be exchanged, preferably with the aid of a suitable key in engagement with the chip flutes on the drill tip. Said key and key grip are preferably used also at mounting.

The surfaces which during the drilling operation must be in engagement are surfaces 53 and 63 as well as the support surface 16 and the front surface 24. The surfaces 53 and 63 cooperate to hold the drill tip such that it cannot loosen in the feed direction, for example at retraction of the tool. The surfaces 53 and 63 are preferably designed such that their cooperation results in some elastic deflection of the projection 60 due to the slide fit. A limited contact surface between 54 and 64 can be allowed. The latter however implies a increased moment at the radius 65. The drill tip is self centering in the tool body, i.e. it moves such that its axis coincides with the rotational axis 22 if it has been displaced during the machining operation. The surface 55 will allow a relatively great radius 65 of the tool body. The surfaces 52 and 62 should not be in engagement with each other during the machining operation. That is realized by having the surface 53 extended. The clearance surfaces 51 and 61 should not be in engagement with each other during the machining operation, and therefore a gap P always arises between them. The gap P is 0,1 - 1,0 mm. The support surface 16 will be forced by the feed force against the front surface 24 during the machining operation, which means that the elastic deflection of the projection tends to decrease somewhat, which however is counteracted by that the projection will be bent radially inwardly due to pressure on the front surface 24 from the feed force.

The invention is useable also for milling cutters. The drill tip is preferably coated with layers of for example Al₂O₃, TiN and/or TiCN. In certain cases it can be well-founded to apply super hard material such as CBN or PCD on the cutting edges. Alternatively ceramic material can be used at injection moulding of the drill tips.

## Claims

1. Tool for relative to a metallic work piece rotary cutting machining, including a tool body (12) and a replaceable cutting portion (11 ), wherein the tool body has a shank portion (40), a front surface (24) and chip flutes (18), wherein the cutting portion has a support surface (16) provided to face towards the front surface, wherein the tool body and the cutting portion comprise means which cooperate to hold them together, said tool having a longitudinal axis (22), said tool body (12) having first and second opposed ends, one of said opposed ends comprising a centrally disposed recess having a wedge-shaped cross-section, and said replaceable cutting portion (11) has first and second opposed ends, one of said opposed ends comprising a cutting edge (19), and the other of said opposed ends comprising a projection having a wedge-shaped cross-section, said cutting portion comprising chip flutes (18), wherein the tool body (12) has at least two circumferentially spaced projections (60), each of said projections having a rotation stop surface (66) and wherein the replaceable cutting portion (11) has at least one rotation stop surface (56) and wherein said means comprise cooperating projections (60) and recesses (50), which are intended to be rotated relative to each other in connection with mounting of the cutting portion to the tool body to form a bayonet coupling, said rotation occurring within an angle interval (φ),
**characterized in that** the tool body (12) has a lower Young's modulus than the cutting portion (11 ) and **in that** said stop surfaces (56,66) are in engagement with each other and the projections (60) are elastically bent outwardly in the radial direction of the tool.

2. Tool according to claim 1,
**characterized in that** the preformed spaces of the chip flutes (18) are used as the entrance and the exit of the bayonet coupling.

3. Tool according to claim 2,
**characterized in that** the cooperating projections (60) and recesses (50) are provided in connection with the peripheries of the cutting portion and of the tool body and that the angle interval (φ) is less than 360°, preferably less than 60°.

4. Tool according to anyone of claims 2 or 3,
**characterized in that** the cooperating projections (60) and recesses (50) comprise surfaces (53,63) angled relative to the tool's axis of rotation (22) intended to receive the forces directed forwardly in the tool's feed direction.

5. Tool according to claims 2, 3 or 4,
**characterized in that** the projections (60) and the recesses (50) lie at a distance from and substantially rearwardly of the associated cutting edge (19) in the tool's rotational direction (R).

6. Tool according to anyone of the preceding claims,
**characterized in that** the projections (60) and the recesses (50) extend in the tangential direction from the chip flute (18) to about the half of the tangential length (G) of the associated land (41 ).

7. Cutting portion suitable for a tool disclosed in claim 1, wherein the cutting portion (11 ) has a circular basic shape and at least one cutting edge (19), which is integral with the cutting portion (11 ), which is provided with a support surface (16) at the end facing away from the cutting edge, said cutting portion comprising at least one chip flute (18), said cutting portion comprising a projection having a wedge-shaped cross-section, wherein the support part of the cutting portion comprises means (50) for constituting a part of a bayonet coupling provided to be able to be rotated within an angle interval (φ), wherein the means extend in the circumferential direction from the chip flute (18) and wherein at least one rotation stop surface (56) is provided,
**characterized in that** the cutting portion (11) is made in cemented carbide and **in that** the cutting portion is adapted to be mounted to a tool body with an elastic slide fit and **in that** the stop surface (56) is provided to be in engagement with a stop surface of the tool body and the cutting portion (11) is provided to elastically bend projections of the tool body outwardly in the radial direction of the tool.

8. Cutting portion according to claim 7,
**characterized in that** the means consist of projections (60) or recesses (50), which are provided diametrically opposed and connecting to the periphery of the cutting portion and that the means extend in the circumferential direction from the chip flute (18) to about the half the tangential length (G) of the associated land (41) and that the angle interval (φ) is less than 360°, preferably less than 60°.

9. Tool body for a tool for rotary chip removing machining, including a shank portion (40), chip flutes (18) and a front surface (24), said body having a center axis (22), said tool body comprising a recess having a wedge-shaped cross-section the front surface (24) of the tool body comprises means (60) for constituting a part of an bayonet coupling and that the means extend in the circumferential direction from the associated chip flute (18), said recess having a stop surface (66),
**characterized in that** the tool body (12) is made in a material which has a lower Young's modulus than cemented carbide and **in that** the stop surface (66) is provided to be in engagement with a stop surface of the cutting portion and the recess comprises projections (60) which are provided to be elastically bent outwardly in the radial direction of the tool.

10. Tool body according to claims 9,
**characterized in that** the means consist of projections (60) or recesses (50), which are provided diametrically opposed and connecting to the periphery of the tool body.

11. Method for mounting a cutting portion to a tool body to form a tool for relative to a metallic work piece rotary cutting machining, said tool including a tool body (12) and a cutting portion (11), wherein the tool body has a shank portion (40), a front surface (24) and chip flutes (18), wherein the cutting portion has a support surface (16) provided to releasably abut against the front surface, wherein the tool body and the cutting portion comprise means which cooperate to hold them together, said tool body (12) having first and second opposed ends, one of said opposed ends comprising a centrally disposed recess having a wedge-shaped cross-section, and said replaceable cutting portion (11) has first and second opposed ends, one of said opposed ends comprising a cutting edge (19), and the other of said opposed ends comprising a projection having a wedge-shaped cross-section, said cutting portion comprises chip flutes (18),
wherein the method comprises the following steps:
- provide the cutting portion (11) in hard material, preferably cemented carbide and the tool body (12) in a material which has a lower Young's modulus than cemented carbide,
- provide complementary projections (60) and recesses (50) on the cutting portion (11) and on the tool body (12),
- bring the cutting portion (11) in a direction towards the tool body (12), so that each projection (60) reaches into an opposed chip flute (18),
- rotate the cutting portion (11) within an angle interval (φ) in a direction (R) relative to the tool body so that each projection is allowed to slide into the associated recess, such that an elastic slide fit is formed between the cutting portion and the tool body while elastically bending the projections (60) outwardly in the radial direction of the tool until stop surfaces (56,66) of each projection and recess abut against each other to form a bayonet coupling.

## Patentansprüche

1. Werkzeug für Drehschneidbearbeitung relativ zu einem metallischen Werkstück, mit einem Werkzeugkörper (12) und einem austauschbaren Schneidabschnitt (11), wobei der Werkzeugkörper einen Schaftabschnitt (40), eine Vorderfläche (24) und Spannuten (18) hat, der Schneidabschnitt eine Halterungsfläche (16) hat, die vorgesehen ist, um zu der Vorderfläche gerichtet zu werden, wobei der Werkzeugkörper und der Schneidabschnitt Mittel aufweisen, die zusammenwirken, um sie zusammenzuhalten, das Werkzeug eine Längsachse (22) hat, der Werkzeugkörper (12) erste und zweite gegenüberliegende Enden hat, von denen eines eine mittig angeordnete Ausnehmung hat mit einem keilförmigen Querschnitt und der austauschbare Schneidabschnitt (11) erste und zweite gegenüberliegende Enden hat, deren eines eine Schneidkante (19) aufweist und deren anderes einen Vorsprung aufweist mit einem keilförmigen Querschnitt, der Schneidabschnitt Spannuten (18) aufweist, wobei der Werkzeugkörper (12) mindestens zwei am Umfang im Abstand angeordnete Vorsprünge (60) hat, deren jeder eine Drehanschlagfläche (66) hat und der austauschbare Schneidabschnitt (11) mindestens eine Drehanschlagfläche (56) hat und wobei das Mittel zusammenwirkende Vorsprünge (60) und Ausnehmungen (50) aufweist, die vorgesehen sind, um relativ zueinander in Verbindung mit dem Anbringen des Schneidabschnittes an dem Werkzeugkörper gedreht zu werden, um eine Bajonettkupplung zu bilden, wobei die Drehung in einem Winkelintervall (φ) auftritt, **dadurch gekennzeichnet, daß** der Werkzeugkörper (12) einen kleineren Elastizitätsmodul hat als der Schneidabschnitt (11) und daß die Anschlagflächen (56, 66) miteinander in Eingriff sind und die Vorsprünge (60) in radialer Richtung des Werkzeuges nach außen elastisch gebogen sind.

2. Werkzeug nach Anspruch 1, **dadurch gekennzeichnet, daß** die vorgeformten Abstände der Spannuten (18) als der Eintritt und der Austritt der Bajonettkupplung verwendet werden.

3. Werkzeug nach Anspruch 2, **dadurch gekennzeichnet, daß** die zusammenwirkenden Vorsprünge (60) und Ausnehmungen (50) in Verbindung mit den Umfängen des Schneidabschnittes und des Werkzeugkörpers vorgesehen sind und daß das Winkelintervall (φ)kleiner als 360° ist, vorzugsweise kleiner als 60°.

4. Werkzeug nach einem der Ansprüche 2 oder 3, **dadurch gekennzeichnet, daß** die zusammenwirkenden Vorsprünge (60) und Ausnehmungen (50) Flächen (53, 63) aufweisen, die relativ zu der Drehachse (22) des Werkzeuges angewinkelt sind, um Kräfte aufzunehmen, die in der Vorschubrichtung des Werkzeuges nach vorn gerichtet sind.

5. Werkzeug nach Anspruch 2, 3 oder 4, **dadurch gekennzeichnet, daß** die Vorsprünge (60) und die Ausnehmungen (50) in einem Abstand von der zugeordneten Schneidkante (19) in der Drehrichtung (R) des Werkzeuges und im wesentlichen rückwärtig derselben liegen.

6. Werkzeug nach einem der vorhergehenden Ansprüche, **dadurch gekennzeichnet, daß** die Vorsprünge (60) und die Ausnehmungen (50) in der tangentialen Richtung von der Spannut (18) um etwa die Hälfte der tangentialen Länge (G) der zugeordneten Fase (41) verlaufen.

7. Schneidabschnitt für ein Werkzeug nach Anspruch 1, wobei der Schneidabschnitt (11) eine kreisförmige Grundgestalt und mindestens eine Schneidkante (19) hat, die mit dem Schneidabschnitt (11 ) einstückig ist, der mit einer Hatterungsftäche (16) an demjenigen Ende versehen ist, welches von der Schneidkante fort gerichtet ist, wobei der Schneidabschnitt mindestens eine Spannut (18) aufweist und einen Vorsprung mit einem keilförmigen Querschnitt aufweist, der Halterungsteil des Schneidabschnittes Mittel (50) aufweist zum Bilden eines Teils einer Bajonettkupplung, die vorgesehen ist, um in der Lage zu sein, innerhalb eines Winkelintervalls (φ) gedreht zu werden, wobei sich die Mittel in der Umfangsrichtung von der Spannut (18) erstrecken und mindestens eine Drehanschlagfläche (56) vorgesehen ist, **dadurch gekennzeichnet, daß** der Schneidabschnitt (11) aus Sinterkarbid hergestellt ist und geeignet ausgestaltet ist, um an einem Werkzeugkörper mit einer elastischen Gleitpassung angebracht zu werden, und daß die Anschlagfläche (56) vorgesehen ist, um mit einer Anschlagfläche des Werkzeugkörpers in Eingriff zu kommen, und der Schneidabschnitt (11 ) vorgesehen ist, um Vorsprünge des Werkzeugkörpers in der radialen Richtung des Werkzeuges nach außen elastisch zu biegen.

8. Schneidabschnitt nach Anspruch 7, **dadurch gekennzeichnet, daß** die Mittel aus Vorsprüngen (60) oder Ausnehmungen (50) bestehen, welche diametral gegenüberliegend vorgesehen sind und die Verbindung zu dem Umfang des Schneidabschnittes schaffen und daß sich die Mittel in der Umfangsrichtung von der Spannut (18) um etwa die Hälfte der tangentialen Länge (G) der zugeordneten Fase (41) erstrecken und daß das Winkelintervall (φ) kleiner als 360°, vorzugsweise kleiner als 60° ist.

9. Werkzeugkörper für ein Werkzeug zum drehenden, spanentfernenden Bearbeiten, mit einem Schaftabschnitt (40), Spannuten (18) und einer Vorderfläche (24), wobei der Körper eine Mittelachse (22), der Werkzeugkörper eine Ausnehmung aufweist mit einem keilförmigen Querschnitt, die Vorderfläche (24) des Werkzeugkörpers Mittel (60) aufweist für das Bilden eines Teils einer Bajonettkupplung und daß sich die Mittel in der Umfangsrichtung von der zugeordneten Spannut (18) erstrecken, wobei die Ausnehmung eine Anschlagfläche (66) hat, **dadurch gekennzeichnet, daß** der Werkzeugkörper (12) aus einem Material hergestellt ist, welches einen geringeren Elastizitätsmodul hat als Sinterkarbid und daß die Anschlagfläche (66) vorgesehen ist, um mit einer Anschlagfläche des Schneidabschnittes in Eingriff zu kommen, und die Ausnehmung Vorsprünge (60) aufweist, die vorgesehen sind, um in der radialen Richtung des Werkzeuges nach außen elastisch gebogen zu werden.

10. Werkzeugkörper nach Anspruch 9, **dadurch gekennzeichnet, daß** die Mittel aus Vorsprüngen (60) oder Ausnehmungen (50) bestehen, die diametral gegenüberliegend vorgesehen sind und die Verbindung zu dem Umfang des Werkzeugkörpers schaffen.

11. Verfahren zum Befestigen eines Schneidabschnittes an einem Werkzeugkörper zur Bildung eines Werkzeuges für die drehende Schneidbearbeitung relativ zu einem metallischen Werkstück, wobei das Werkzeug einen Werkzeugkörper (12) und einen Schneidabschnitt (11) aufweist, der Werkzeugkörper einen Schaftabschnitt (40), eine Vorderfläche (24) und Spannuten (18) hat, der Schneidabschnitt eine Halterungsfläche (16) hat, die vorgesehen ist, um lösbar gegen die Vorderfläche anzustoßen, wobei der Werkzeugkörper und der Schneidabschnitt Mittel aufweisen, die zusammenarbeiten, um sie zusammenzuhalten, der Werkzeugkörper (12) erste und zweite gegenüberliegende Enden hat, deren eines eine mittig angeordnete Ausnehmung aufweist mit einem keilförmigen Querschnitt, der austauschbare Schneidabschnitt (11) erste und zweite gegenüberliegende Enden hat, deren eines eine Schneidkante (19) aufweist und deren anderes einen Vorsprung mit einem keilförmigen Querschnitt aufweist, wobei der Schneidabschnitt Spannuten (18) aufweist und das Verfahren die folgenden Schritte aufweist:
- Vorsehen des Schneidabschnittes (11) in Hartmaterial, vorzugsweise Sinterkarbid und des Werkzeugkörpers (12) in einem Material, welches einen niedrigeren Elastizitätsmodul hat als Sinterkarbid,
- Vorsehen komplementärer Vorsprünge (60) und Ausnehmungen (50) auf dem Schneidabschnitt (11) und auf dem Werkzeugkörper (12),
- Bringen des Schneidabschnittes (11) in eine Richtung zu dem Werkzeugkörper (12) hin, so daß jeder Vorsprung (60) in eine entgegengesetzte Spannut (18) reicht,
- Drehen des Schneidabschnittes (11) innerhalb eines Winkelintervalls (φ) in einer Richtung (R) relativ zu dem Werkzeugkörper derart, daß jeder Vorsprung die Möglichkeit hat, in die zugeordnete Ausnehmung zu gleiten, derart, daß eine elastische Gleitpassung zwischen dem Schneidabschnitt und dem Werkzeugkörper gebildet wird, während die Vorsprünge (60) in der radialen Richtung des Werkzeuges nach außen elastisch gebogen werden, bis Anschlagflächen (56. 66) jedes Vorsprunges und jeder Ausnehmung gegeneinander anstoßen, um eine Bajonettkupplung zu bilden.

## Revendications

1. Outil destiné, par rapport à une pièce d'ouvrage métallique, à un usinage par coupe rotatif, comprenant un corps d'outil (12) et une partie de coupe remplaçable (11), dans lequel le corps d'outil comprend une partie de queue (40), une surface avant (24) et des cannelures à copeaux (18), dans lequel la partie de coupe comprend une surface de support (16) disposée pour être orientée vers la surface avant, dans lequel le corps d'outil et la partie de coupe comprennent des moyens qui coopèrent pour les maintenir ensemble, ledit outil présentant un axe longitudinal (22), ledit corps d'outil (12) comprenant des première et seconde extrémités opposées, l'une desdites extrémités opposées comprenant un évidement disposé au centre présentant une section transversale en forme de coin, et ladite partie de coupe remplaçable (11) comprend des première et seconde extrémités opposées, l'une desdites extrémités opposées comprenant une arête tranchante (19) et l'autre desdites extrémités opposées comprenant une saillie présentant une section transversale en forme de coin, ladite partie de coupe comprenant des cannelures à copeaux (18), dans lequel le corps d'outil (12) comprend au moins deux saillies espacées circonférentiellement (60), chacune desdites saillies présentant une surface d'arrêt de rotation (66) et dans lequel la partie de coupe remplaçable (11) présente au moins une surface d'arrêt de rotation (56) et dans lequel lesdits moyens comprennent des saillies (60) et des évidements (50) coopérants, qui sont prévus pour être tournés les uns par rapport aux autres en association avec le montage de la partie de coupe sur le corps d'outil pour former un accouplement à baïonnette, ladite rotation se produisant à l'intérieur d'un intervalle angulaire (φ),
**caractérisé en ce que** le corps d'outil (12) a un module de Young, inférieur à celui de la partie de coupe (11) et **en ce que** lesdites surfaces d'arrêt (56, 66) sont en contact les unes avec les autres et les saillies (60) sont élastiquement fléchies vers l'extérieur dans la direction radiale de l'outil.

2. Outil selon la revendication 1,
**caractérisé en ce que** les espaces préformés des cannelures à copeaux (18) sont utilisés comme entrée et sortie de l'accouplement à baïonnette.

3. Outil selon la revendication 2,
**caractérisé en ce que** les saillies (60) et les évidements (50) coopérants sont prévus en liaison avec les périphéries de la partie de coupe et du corps d'outil et **en ce que** l'intervalle angulaire (φ) est inférieur à 360°, de préférence inférieur à 60°.

4. Outil selon l'une quelconque des revendications 2 ou 3,
**caractérisé en ce que** les saillies (60) et les évidements (50) coopérants comprennent des surfaces (53, 63) formant un angle par rapport à l'axe de rotation (22) de l'outil, prévues pour recevoir les forces dirigées vers l'avant dans la direction d'avance de l'outil.

5. Outil selon les revendications 2, 3 ou 4,
**caractérisé en ce que** les saillies (60) et les évidements (50) se situent à une certaine distance de l'arête tranchante associée (19) et sensiblement vers l'arrière de celle-ci dans le sens de rotation de l'outil (R).

6. Outil selon l'une quelconque des revendications précédentes,
**caractérisé en ce que** les saillies (60) et les évidements (50) s'étendent dans la direction tangentielle depuis la cannelure à copeaux (18) jusqu'à environ la moitié de la longueur tangentielle (G) de la surface associée (41).

7. Partie de coupe convenant à un outil décrit dans la revendication 1, dans lequel la partie de coupe (11) présente une forme de base circulaire et au moins une arête tranchante (19), qui fait partie intégrante de la partie de coupe (11), qui est munie d'une surface de support (16) à l'extrémité tournant le dos à l'arête tranchante, ladite partie de coupe comprenant au moins une cannelure à copeaux (18), ladite partie de coupe comprenant une saillie présentant une section transversale en forme de coin, dans laquelle la partie de support de la partie de coupe comprend des moyens (50) destinés à constituer une partie d'un accouplement à baïonnette, prévus pour pouvoir être tournés à l'intérieur de l'intervalle angulaire (φ), dans laquelle les moyens s'étendent dans la direction circonférentielle depuis la cannelure à copeaux (18) et dans laquelle au moins une surface d'arrêt de rotation (56) est prévue,
**caractérisé en ce que** la partie de coupe (11) est faite dans un carbure cémenté et **en ce que** la partie de coupe est conçue pour être montée sur un corps d'outil avec un ajustement glissant élastique et **en ce que** la surface d'arrêt (56) est prévue pour être en contact avec une surface d'arrêt du corps d'outil et la partie de coupe (11) est prévue pour fléchir élastiquement les saillies du corps d'outil vers l'extérieur dans la direction radiale de l'outil.

8. Partie de coupe selon la revendication 7,
**caractérisé en ce que** les moyens sont constitués de saillies (60) ou d'évidements (50) qui sont disposés de façon diamétralement opposée et se raccordant à la périphérie de la partie de coupe et **en ce que** les moyens s'étendent dans la direction circonférentielle depuis la cannelure à copeaux (18) jusqu'à environ la moitié de la longueur tangentielle (G) de la surface associée (41) et **en ce que** l'intervalle angulaire (φ) est inférieur à 360°, de préférence inférieur à 60°.

9. Corps d'outil pour un outil destiné à un usinage rotatif par enlèvement de copeaux, comprenant une partie de queue (40), des cannelures à copeaux (18) et une surface avant (24), ledit corps d'outil ayant un axe central (22), ledit corps d'outil comprenant un évidement présentant une section transversale en forme de coin, la surface avant (24) du corps d'outil comprend des moyens (60) destinés à constituer une partie d'un accouplement à baïonnette et les moyens s'étendent dans la direction circonférentielle depuis la cannelure à copeaux associée (18), lesdits évidements ayant une surface d'arrêt (66),
**caractérisé en ce que** le corps d'outil (12) est fait dans un matériau qui a un module de Young inférieur à celui d'un carbure cémenté et **en ce que** la surface d'arrêt (66) est prévue pour être en contact avec une surface d'arrêt de la partie de coupe et l'évidement comprend des saillies (60) qui sont prévues pour être élastiquement fléchies vers l'extérieur dans la direction radiale de l'outil.

10. Corps d'outil selon la revendication 9,
**caractérisé en ce que** les moyens sont constitués de saillies (60) ou d'évidements (50) qui sont disposés de façon diamétralement opposée et se raccordant à la périphérie du corps d'outil.

11. Procédé de montage d'une partie de coupe sur un corps d'outil pour former un outil destiné, par rapport à une pièce d'ouvrage métallique, à un usinage rotatif par coupe, ledit outil comprenant un corps d'outil (12) et une partie de coupe (11), dans lequel le corps d'outil comprend une partie de queue (40), une surface avant (24) et des cannelures à copeaux (18), dans lequel la partie de coupe présente une surface de support (16) prévue pour buter de façon libérable contre la surface avant, dans lequel le corps d'outil et la partie de couple comprennent des moyens qui coopèrent pour les maintenir ensemble, ledit corps d'outil (12) ayant des première et seconde extrémités opposées, l'une desdites extrémités opposées comprenant un évidement disposé au centre présentant une section transversale en forme de coin et ladite partie de coupe remplaçable (11) comprend des première et seconde extrémités opposées, l'une desdites extrémités opposées comprenant une arête tranchante (19) et l'autre desdites extrémités opposées comprenant une saillie présentant une section transversale en forme de coin, ladite partie de coupe comprend des cannelures à copeaux (18), dans lequel le procédé comprend les étapes suivantes :
- réaliser la partie de coupe (11) dans un matériau dur, de préférence un carbure cémenté et le corps d'outil (12) dans un matériau qui a un module de Young inférieur à celui d'un carbure cémenté,
- prévoir des saillies (60) et des évidements (50) complémentaires sur la partie de coupe (11) et sur le corps d'outil (12),
- amener la partie de coupe (11) dans une direction vers le corps d'outil (12), de sorte que chaque projection (60) atteigne une cannelure à copeaux opposée (18),
- tourner la partie de coupe (11) à l'intérieur d'un intervalle angulaire (φ) dans un sens (R) par rapport au corps d'outil de sorte que chaque saillie puisse glisser dans l'évidement associé, de sorte qu'un ajustement glissant élastique soit formé entre la partie de coupe et le corps d'outil tout en fléchissant élastiquement les saillies (60) vers l'extérieur dans la direction radiale de l'outil jusqu'à ce que les surfaces d'arrêt (56, 66) de chaque saillie et évidement butent les unes contre les autres pour former un accouplement à baïonnette.
